# EUROPÄISCHE PATENTSCHRIFT

(11) **EP 1 510 456 B1**
(45) Veröffentlichungstag und Bekanntmachung des Hinweises auf die Patenterteilung: **05.03.2008**
(21) Anmeldenummer: 04019470.6
(22) Anmeldetag: 17.08.2004
(51) Int. Cl.: B64D 11/00, B64D 11/02

(54) **Passagierabteil in der Kabine eines Verkehrsflugzeuges**
Passenger compartment in an aircraft cabin
Compartiment pour passagers dans une cabine d'un aéronef

(30) Priorität: 26.08.2003 DE 10339077
(43) Veröffentlichungstag der Anmeldung: 02.03.2005
(73) Patentinhaber: Airbus Deutschland GmbH, 21129 Hamburg (DE)
(72) Erfinder: Sprenger, Wilfried, Ing., 25761 Büsum (DE); Rössner, Bernd, 21224 Rosengarten (DE)
(74) Vertreter: Klöpper, Ute

(56) Entgegenhaltungen:
- WO-A-03/026962
- DE-A- 19 813 866
- US-A- 4 645 145
- DATABASE WPI Section PQ, Week 200153 Derwent Publications Ltd., London, GB; Class Q21, AN 2001-486316 XP002305696 & JP 2001 180596 A (MOTOKI K) 3. Juli 2001 (2001-07-03)

## Beschreibung

Die Erfindung betrifft ein Passagierabteil in der Kabine eines Verkehrsflugzeug, das mit funktionellen Ausstattungselementen für unterschiedliche Verwendungen ausgestattet ist und in der Raumgröße ungefähr einer behindertengerechten Toilette entspricht sowie eine Stirnwand, eine Rückwand und Seitenwände aufweist.

Infolge der zunehmenden Größe von Passagierflugzeugen und einer längeren Flugdauer, beispielsweise von über 15 Stunden, kommt es an Bord zu neuen zusätzlichen Anforderungen und Situationen, die durch die Flugbegleiter gemeistert werden müssen und für die die Fluglinien Vorsorge zu tragen haben. Beispielsweise nimmt die Zahl von vor allem älteren Personen als Fluggäste zu und das Risiko steigt, dass ernsthafte Gesundheitsprobleme während eines Flugs auftreten. Auch muss Müttern mit Kleinkindern entsprechende Gelegenheit zur Kinderpflege und -versorgung gegeben werden. Daneben kommt es verstärkt zu Zwangslagen, wie die Notwendigkeit des Ruhigstellens und Isolierens von renitenten Flugreisenden. Auslöser für solches Verhalten können beispielsweise Alkohol- und Drogenmissbrauch, Aggressivität aber auch Anfälle und Krämpfe sein. Auch kann ein lange Flugzeit sinnvoll beispielsweise für Büroarbeit genutzt werden. Hierzu eignet sich jedoch ein enger Passagiersitz nur im beschränkten Maße. Aus US 5,024,398 ist es bekannt, mindestens ein Office-Modul innerhalb der Passagierkabine eines Flugzeuges vorzusehen, um jeweils ein ungestörtes Arbeiten für den Nutzer eines derartigen Moduls zu ermöglichen. Die Module sind dafür ausgestattet beispielsweise mit Telefon, Monitor, Computer, Anschlüsse für Laptop, Schreibtisch und Sitz. Das Modul wird mittels Seitenwänden abgegrenzt und weist eine Zugangsöffnung auf, die vorzugsweise mit einem Vorhang oder ähnliches verschließbar ist. Weitere spezielle zweckgebundene Räume, wie beispielsweise Mutter-Kind-Abteile, Informationscenter, Telefonzelle etc., sind in Passagierflugzeugen - im Unterschied zum Bahn- und Schiffstransport - nicht vorgesehen. Der Grund liegt im wesentlichen in den beengten Platzverhältnissen im Flugzeug und der bislang fast ausschließlichen Nutzung von Allgemeinräumen als Toiletten.

DE-A-198 13 866 ist ein ein Passagierabteil für ein Luftfahrzeug bekannt, weiches mit Einrichtungen und Komponenten zur kosmetischen Behandlung sowie Körperpflege ausgestattet ist. Es sind Festeinbauten vorgesehen, wie beispielsweise Waschbecken und ein Sitz. Der Zweck dieser Passagiermodule ist ausschließlich darin zu sehen, dass den Passagieren zur persönlichen Nutzung während eines Fluges ein Raum zur Körperpflege zur Verfügung gestellt wird. Dieses Abteil für die Nutzung in einem Verkehrsflugzeug ist jedoch nicht geeignet, noch weitere Funktionen für die Passagiere anzubieten, die über eine persönliche Nutzung hinausgehen.

US-A-4 645 145 zeigt ein Passagierabteil mit einer umbaubaren Toilette, wobei die Funktionen Toilette und Körperpflege/kosmetische Pflege hier in der Nutzung dieses Abteils zur Verfügung gestellt werden. Weitere Funktionen, die über eine persönliche Nutzung eines Passagieres hinausgehen, sind nicht offenbart.

Somit ist es Aufgabe der Erfindung, ein vielseitig nutzbares Passagierabteil in einem Verkehrsflugzeug zu schaffen, ohne dass ein nennenswerter zusätzlicher Platzbedarf entsteht sowie das Erscheinungsbild des Passagierabteils der jeweiligen Nutzung unaufwändig anzupassen.

Die Lösung der Aufgabe erfolgt durch die erfindungsgemäße Adaption eines Passagierabteils mit funktionellen Ausstattungselementen für unterschiedliche Verwendungen innerhalb einer Passagierkabine eines Verkehrsflugzeuges gemäß den Maßnahmen des Anspruchs 1.

Mit der Erfindung ist eine vorteilhafte Adaption einer vergrößerten behindertengerechten Toilette mit den Maßnahmen eines als Mehrzweckraum ausgebildeten Passagierabteils vorgesehen und neben der Toilettenfunktion ist das Abteil als Arrestraum, als Versorgungsraum für Mutter-Kind/Säuglingsbetreuung oder zur medizinischen Betreuung von Notfall-Patienten, als Büro oder Konferenzraum mit einer entsprechenden Ausstattung oder als Raum für Sonderbehandlungen nutzbar.

Da eine derartige Einrichtung bisher in Flugzeugen nicht vorhanden ist, kann erwartet werden, dass insbesondere bei LangstreckenflUgen der Bedarf an einem separaten Passagierabteil zum Erreichen einer gewissen Privatsphäre in bestimmten Situationen, wie beispielsweise das Stillen und Füttern von Kindern, das Wechseln eines Verbandes oder die medizinische Versorgung eines Notfallpatienten, oder zum separaten Transport von beispielsweise randalierenden oder gewaltbereiten Fluggästen vorhanden ist und eine erhebliche Verbesserung des Komforts sowie der Sicherheit des normalen Passagiers ermöglicht wird.

Weiterbildungen und vorteilhafte Ausgestaltungen der Erfindung sind in den Ansprüchen 2 bis 14 angegeben. Weitere Einzelheiten und Vorteile ergeben sich aus der nachfolgenden Beschreibung von Ausführungsbeispielen der Erfindung.

In der Zeichnung sind Ausführungsbeispiele der Erfindung dargestellt, welche nachstehend anhand der Figuren 1 bis 6 näher beschrieben sind. In den Figuren sind gleiche Bauteile mit gleichen Bezugszeichen versehen.

Es zeigen im einzelnen:
- Fig. 1: den Kabinen-Flurbereich eines Passagierflugzeugs,
- Fig. 2: den Auf- und Grundriss eines Passagierabteils als Mehrzweckraum,
- Fig. 3: den Mehrzweckraum zur Personenarretierung,
- Fig. 4: den Mehrzweckraum für eine Mutter/Kind-Nutzung oder eine medizinische Nutzung,
- Fig. 5: den Mehrzweckraum als Büro oder Telefonraum sowie
- Fig. 6: Konstruktionsdetails von einem Tisch- und einem Sitzelement.

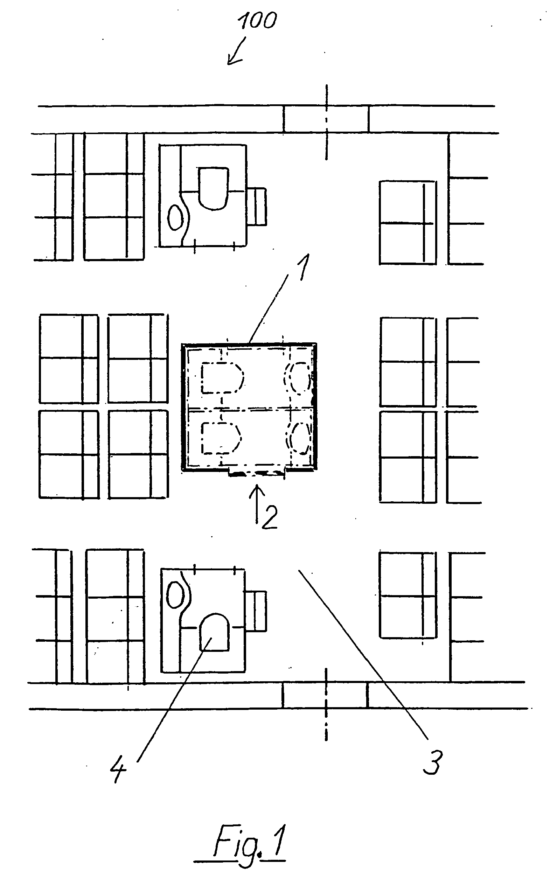

In dem in Fig. 1 etwa maßstäblich dargestellten Kabinen-Flurbereich 3 eines Passagierflugzeugs 100 befindet sich ein als Mehrzweckraum 1 ausgebildetes Passagierabteil anstelle zweier Normaltoiletten, welche strichpunktiert eingezeichnet sind. Der Zugang 2 zu diesem Abteil ist mit einem Pfeil angedeutet. Da der Mehrzweckraum 1 den vorgesehenen Platz für Toiletteräume nutzt, sind die Toiletten an anderer Stelle im Flugzeug 100 zu positionieren. Um dabei die Anzahl der Passagiersitze nicht zu verringern, ist es bei Großraumflugzeugen bereits üblich, zusätzliche Toiletten im Unterflurbereich einzubauen.

In Fig. 1 ist der Mehrzweckraum 1 beispielsweise mit annähernd quadratischem Grundriss und einer Seitenlänge von ca. 1470 mm (58 Zoll) vorgesehen. Selbstverständlich ist auch ein rechteckiger Grundriss, beispielsweise mit Seitenlängen im Bereich von 1200 bis 1600 mm möglich, ohne dass der Kabinen-Flurbereich 3 zu sehr eingeschränkt wäre. Für die Größenauslegung ist zu beachten, dass für mindestens zwei Personen für einen dauernden Aufenthalt im Passagierabteil/Mehrzweckraum 1 ausreichend Platz zur Verfügung steht. Möglich ist es dabei in einer nachfolgend beschriebenen Ausführungsform, dass eine behindertengerechte Flugzeugtoilette, die für die Platzverhältnisse im Flugzeug relativ großzügig gestaltet ist, mit entsprechenden Funktionselementen zu einem Mehrzweckraum 1 adaptiert werden kann. Eine Kopplung einer behindertengerechten Flugzeugtoilette mit einem Mehrzweckraum 1 ist dann vorteilhaft, wenn die Flugzeugpassagierkabine 100 mit einer solchen Toilette ausgestattet ist und nur eine niedrige Nutzungsfrequenz aufweist. Somit ist dieser Raum auch für andere Zwecke nutzbar.

Darüber hinaus ist es jedoch auch möglich, unabhängig von einer Flugzeugtoilette und damit unabhängig von den dazugehörigen Wasser- und Abwasserinstallationen das erfindungsgemäße Passagierabteil 1 in einer Passagierkabine anzuordnen.

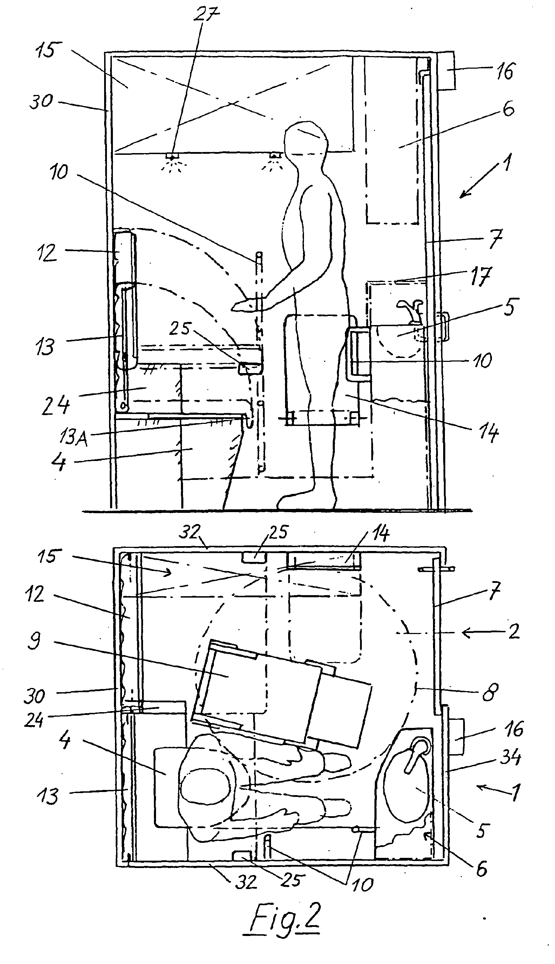

In der Fig. 2 ist der Auf- und Grundriss des Mehrzweckraums 1 in der Konfiguration einer behindertengerechten Toilette mit Sanitäreinbauten, wie eine Toilette 4, ein Handwaschbecken 5 und einem darüber befindlichem Sanitärschrank 6, dargestellt. Der Zugang 2 ist speziell für Rollstuhlbenutzer durch den Einbau einer Schiebetür 7 erleichtert, welche entweder manuell oder automatisch auf Knopfdruck bewegt werden kann. Zur Aktivierung des Türmechanismus kann ein Zahlen-Code über ein Tastfeld oder ein Steckschlüssel dienen, falls der Raum abschließbar ist und nur durch das Kabinenpersonal geöffnet und versperrt werden soll. Durch die relativ große Grundrissfläche des Mehrzweckraums 1 ist eine ausreichende Rangierfläche 8 (strichpunktiert) auch für ein Reversieren eines Rollstuhls 9 vorhanden. Kräftig dimensionierte Haltegriffe 10 helfen bei der Bewegung von Behinderten. Für die weiteren Nutzungen befinden sich im Passagierabteil 1 zusätzliche Einrichtungselemente: Ein ausklappbares Tisch/Sitzelement 12 und ein ausklappbares Sitzelement 13, oberhalb der Toilette 4 befestigt, sind an der Rückwand 30 oder einer Seitenwand 32, angeordnet. Darüber hinaus sind ein Wandklappsitz 14 und ein Hängeschrank 15 vorgesehen. Für die Nutzung als Toilette sind die Elemente 12, 13 und 14 hochgeklappt und weisen zum Rauminneren eine glatte und gut zu reinigende Oberfläche auf. Ein außen angebrachtes Anzeigen-Paneel 16 gibt mit Leuchtschrift die jeweilige Nutzung an; in vorliegendem Fall: /Behinderten-WC/Besetzt/Frei/.

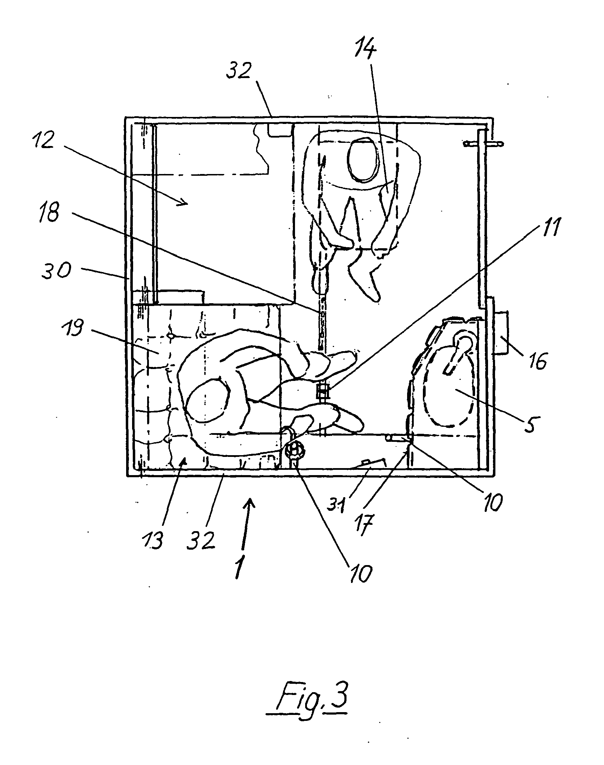

In Fig. 3 erfolgte eine Adaption des Passagierabteils 1 in eine Arrestzelle zur Arretierung und Verwahrung von die Flugsicherheit gefährdenden Personen. Zu diesem Zweck wird das Sitzelement 13 auf die Toilette 4 heruntergeschwenkt und verriegelt.

Durch eine L-förmige Gestaltung der Sitzvorderkante 13A (vgl. Fig.2) des Sitzelementes 13 verschwindet die Toilette 4 optisch weitgehend. Ebenso kann mit einer beispielsweise als Faltenbalg oder Rollo ausgebildeten Abdeckung 17 auch das Handwaschbecken 5 optisch neutralisiert werden und bedarfsweise als Ablagefläche dienen. Die zu arretierende Person kann nun auf dem Sitz 13 mittels der vorhanden stabilen Haltegriffe 10 und Halteösen 11 durch Hand- und Fußschellen o.ä. sicher fixiert werden. Die Halteösen 11 können dafür vorzugsweise innerhalb von im Kabinen-Flurbereich 3 verlaufenden bekannten Sitzschienen 18 strukturfest befestigt sein. In der Zeichnung ist noch eine weitere Person auf dem heruntergeklappten Klappsitz 14 dargestellt, beispielsweise kann so eine weitere arretierte Person oder ein Bewacher hier Platz nehmen. Die Zeichnung lässt auch erkennen, dass im Mehrzweckraum 1 mindestens drei Personen Platz hätten. Das Tischelement 12 ist dann zu einem Sitzelement umfunktioniert. Bedarfsweise können weitere Halteösen 11 an den vorhandenen Sitzschienen 18 oder an den Wänden 30, 32 oder 34 befestigt werden. Mit der vorgeschlagenen Lösung können so gewaltbereite Passagiere nachhaltig ruhiggestellt und isoliert werden, wobei im Mehrzweckraum 1 nur wenige Handgriffe nötig sind, um die ursprüngliche Toilette in einen neutral anmutenden Raum umzuwandeln. Zur Nutzung als Arrestzelle sind jedoch noch weitere Vorkehrungen zu treffen: So sind eine Überwachungseinrichtung 31, stabile und schallisolierte Wandelemente 30, 32 und 34 sowie auch Hinweise außen am Anzeigen-Paneel 16 vorgesehen; daneben ist ein Rauch- und Temperatursensor in Toilettenräumen generell vorhanden. Selbstverständlich soll die Überwachungseinrichtung 31 nur im speziellen Fall aktiviert werden können, wie bei der Überwachung von arretierten Personen, beispielsweise durch Herunterklappen des Sitzes 13. Dies kann durch einen Kontaktsensor sichergestellt werden.

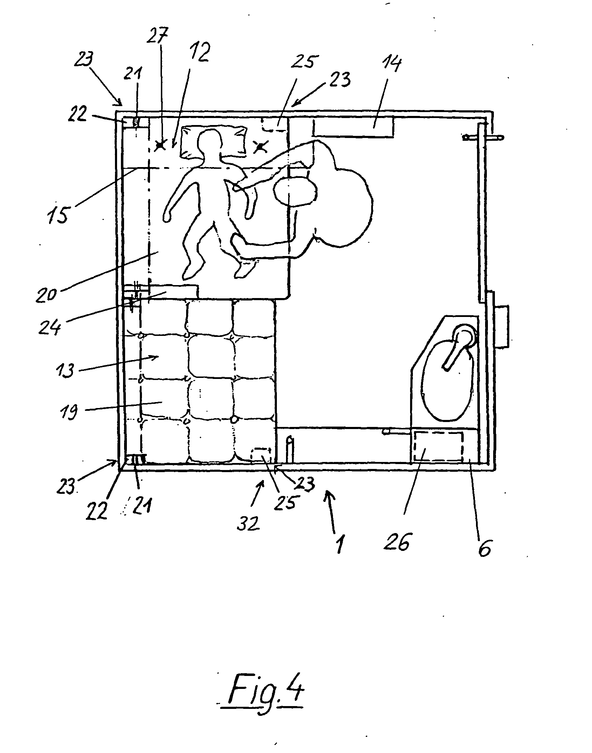

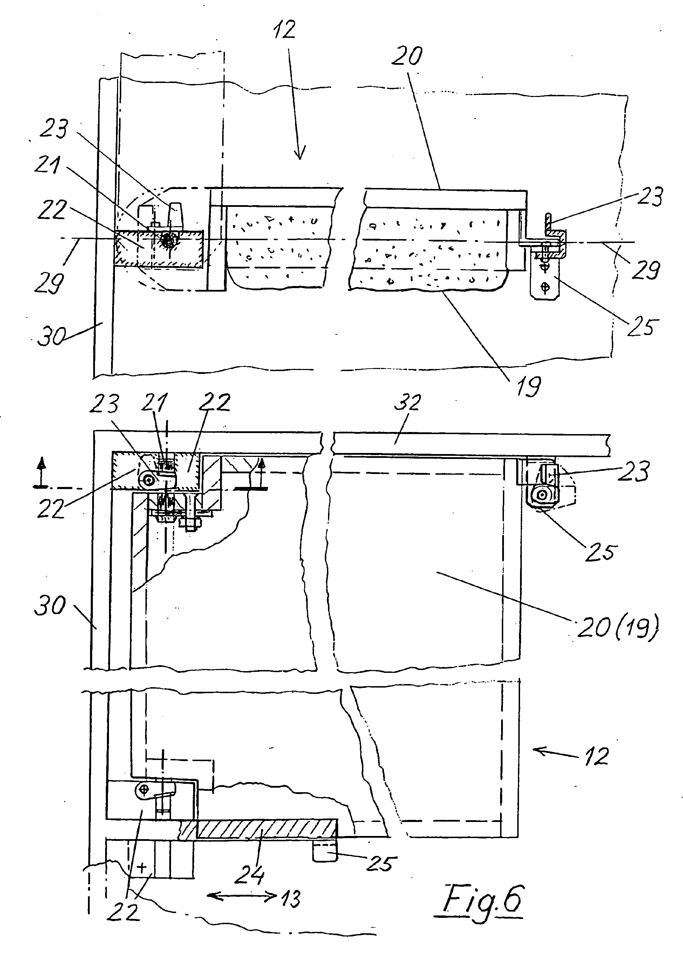

Fig. 4 zeigt den Mehrzweckraum 1 adaptiert als Mutter/Kind-Raum bzw. als Behandlungsraum erkrankter Passagiere in einer Versorgungskonfiguration. Gegenüber der in Fig. 2 dargestellten Toilettenkonfiguration braucht lediglich das Tischelement 12 heruntergeklappt und verriegelt zu werden, um als Wickeltisch zu fungieren. Falls die dabei vorhandene gepolsterte Oberfläche 19 nicht erwünscht ist, kann die glatte Oberfläche 20 einfach durch Umdrehen der Tischfläche 12 bereitgestellt werden. Dabei greifen Drehbolzen 21 in entsprechende genutete Beschläge 22 ein und werden dort mit einer Verriegelung 23 fixiert (siehe auch Detailzeichnung in Fig. 6). Die anderen Auflagepunkte werden durch eine Mittenwand 24 und einen Auflagebeschlag 25 an der Seitenwand 32 gewährleistet. Am Auflagebeschlag 25 ist auch eine ähnliche einfache Verriegelung 23 wie beim Beschlag 22 vorgesehen. Das o.g. Umdrehen des Tischelements 12 ist leicht möglich, da dieses nur ein geringes Gewicht (ca. 5 kg) aufweist. Bedarfsweise kann auch das Sitzelement 13 oder der Wandklappsitz 14 heruntergeklappt werden. Dies ist beispielsweise dann notwendig, wenn ein Passagier im Sitzen medizinisch behandelt werden soll. Falls der Patient in annähernd liegender Stellung zu versorgen ist, kann das Sitzelement 13 in weitere, in einer Ebene zur Tischplatte 12 liegende Beschläge 22 und 25 eingehängt und entsprechend abgestützt werden, so dass die Elemente 12 und 13 eine durchgehende ebene Fläche bilden. Zwecks Erwärmung von Lebensmitteln, z.B. Babynahrung, kann eine im Sanitärschrank 6 untergebrachte Mikrowelle 26 dienen. Für die Beleuchtung sorgt eine zentrale Deckenbeleuchtung als auch vorteilhaft ein Lichtband 27, welches an der Unterseite des Hängeschranks 15 zur Ausleuchtung des ausgeklappten Tischelements 12 dient.

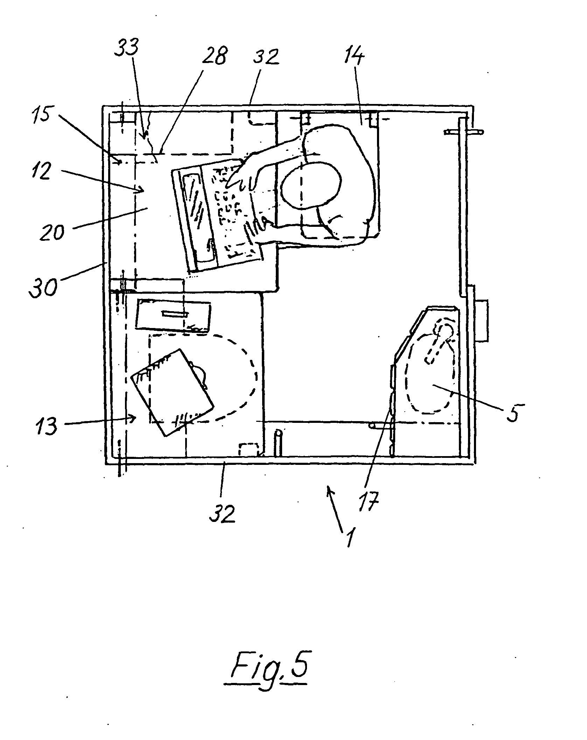

In Fig. 5 ist die Nutzung des Passagierabteils als Mehrzweckraum 1 in der Konfiguration als Büro dargestellt. Mit wenigen Handgriffen verschwindet die Sanitäreinrichtung unter dem Sitzelement 13 durch Herunterklappen und damit Abdecken der Toilette 4 sowie das Handwaschbecken 5 durch das Ausfahren der Abdeckung 17. Damit kann auch ein zusätzlicher Ablageplatz geschaffen werden. Das Tischelement 12 wird heruntergeklappt und mit der glatten Seite 20 nach oben positioniert. Zum Arbeiten am Tisch 12, der beispielsweise eine Höhenposition von ca. 750 mm aufweist, kann der Nutzer den Wand-Klappsitz 14 oder auch das Sitzelement 13 als Sitzgelegenheit verwenden. Unter dem Tisch 12 wird der Platz zur Unterbringung einer EDV-Anlage 28 genutzt. Zubehörgeräte bzw. Kommunikationsgeräte 33, wie Drucker, Keyboard, Fax, Telefax, Telefon u.ä. können dem Hängeschrank 15 entnommen werden oder sind an einer Wand 30, 32 oder 34 montiert. Die vorhandenen Kommunikationsgeräte 33 sind somit im unmittelbaren Zugriffsbereich des Nutzers entweder an der Wand 30 und/oder 32 und/oder 34, auf dem Tisch 12 oder auf dem Sitzelement 13 (in einer Ebene mit dem Tisch 12 positioniert) angeordnet. Das Lichtband 27, angeordnet an der Unterseite des Hängeschranks 15, dient zur Ausleuchtung des ausgeklappten Tischelements 12 und damit der Schreibtischarbeitsfläche.

Neben der Nutzung als Büro kann das so konfigurierte Passagierabteil 1 auch noch weiteren Zwecken dienen, etwa als Konferenzraum (mit mindestens zwei Sitzplätzen 13 und 14), als Telefonzelle, zum Verstauen von Sondergepäck (z.B. wertvolle Musikinstrumente) oder als Raucherraum. Für den Fall einer Nutzung als eine sogenannte "Raucherinsel" besteht die Möglichkeit, die Klimaanlage derart zu steuern, dass im abgeschlossenen Passagierabteil 1 ein geringer Unterdruck gegenüber der Passagierkabine herrscht. Damit wird eine Geruchsbelästigung außerhalb des Passagierabteils 1 vermieden. Mit dem Anordnen eines derart flexibel anpassbaren Passagierabteils 1 innerhalb einer Flugzeugpassagierkabine ergeben sich für die Fluggesellschaften Möglichkeiten, entsprechend des Bedarfs diesen Raum zur Nutzung für die Passagiere freizugeben oder gegebenenfalls auch zu vermieten oder als Komforterhöhung beispielsweise für höhere Beförderungsklassen anzubieten.

In Fig. 6 sind Konstruktionsdetails von dem Tisch- und dem Sitzelement 12 und 13 in Schnitten im Auf- und Grundriss dargestellt. Im einzelnen zeigt die Fig. 6 das Tischelement 12 in ausgeschwenkter Position, wobei die Art der Lagerung an der Rückwand 30 bzw. der Seitenwand 32 mit den Beschlägen 22 und 25 auch für das Sitzelement 13 gilt. Das Tisch- sowie das Sitzelement 12 und 13 besitzen ähnliche Aufbau mit einer glatten, leicht zu reinigenden und festen Oberfläche 20 und auf der anderen Seite beispielsweise eine gepolsterte Oberfläche 19. Dadurch, dass sich der Drehbolzen 21 in der Mittenebene 29 des Querschnitts vom Sitz- bzw. Sitzelement 12 bzw. 13 befindet, ist die wahlweise Verwendung der glatten oder gepolsterten Oberfläche 20 oder 19 ohne Einschränkung der Schwenkbewegung möglich. Lediglich durch Umdrehen der Elemente 12 und 13 kann die gewünschte Oberfläche bereitgestellt werden. Zur sicheren Positionierung dienen einfache drehbare Verriegelungen 23, welche jedoch auch eine andere Bauweise als die dargestellte aufweisen können.

### Bezeichnungsliste

- 1: Mehrzweckraum/Passagierabteil
- 2: Zugang Mehrzweckraum
- 3: Kabinen-Flurbereich
- 4: WC-Installation
- 5: Handwaschbecken
- 6: Sanitärschrank
- 7: Schiebetür
- 8: Rangierfläche
- 9: Rollstuhl
- 10: Haltegriffe
- 11: Halteösen
- 12: Tisch/Sitzelement
- 13: Sitzelement
- 13A: Sitzvorderkante
- 14: (Wand)-Klappsitz
- 15: Hängeschrank
- 16: Anzeige-Panel
- 17: (Faltenbalg)-Abdeckung
- 18: Sitzschienen
- 19: gepolsterte Oberfläche
- 20: glatte Oberfläche
- 21: Drehbolzen
- 22: Beschlag
- 23: Verriegelung
- 24: Mittenwand
- 25: Auflagebeschlag
- 26: Mikrowelle
- 27: Lichtband
- 28: EDV-Anlage
- 29: Mittenebene
- 30: Rückwand
- 31: Überwachungseinrichtung
- 32: Seitenwand
- 33: Zubehör- u. Kommunikationsgeräte
- 34: Stirnwand

- 100: Passagierflugzeug

## Patentansprüche

1. Passagierabteil für eine Kabine eines Verkehrsflugzeuges, das mit Ausstattungselementen für unterschiedliche Verwendungen, enthaltend ein Tischelement (12) und mindestens ein Sitzelement (13, 14), ausgestattet ist und in der Raumgröße ungefähr einer behindertengerechten Toilette entspricht sowie eine Stirnwand, eine Rückwand und Seitenwände aufweist, das Passagierabteil (1) weiterhin mit Komponenten zur Vielfachnutzung ausgestattet ist, als Tischelement (12) ein veränderbares Tischelement (12) vorgesehen ist sowie Mittel zur Arretierung von Personen (10, 11) und entsprechend der Verwendungskonfiguration anpassbare Stauräume (15) vorgesehen sind, **dadurch gekennzeichnet, dass** die Komponenten zur Vielsfachnutzung aus der Gruppe von Kommunikationsgeräten (33), EDV-Anlagen (28), Mikrowellen (26) und Überwachungseinrichtungen (31) auswählbar sind, das Passagierabteil (1) in eine Arrestzelle konfigurierbar ist, wobei die Mittel zur Arretierung von Personen durch stabile Haltegriffe (10) und in Sitzschienen (18) befestigte Halteösen (11) zur Befestigung von Hand- bzw. Fußschellen gebildet sind.

2. Passagierabteil nach Anspruch 1, **dadurch gekennzeichnet, dass** das Passagierabteil (1) mit einer Toilette (4) sowie ein Handwaschbecken (5) ausgestattet ist und an der Wand (30, 32 oder 34) oberhalb der Toilette (4) das Sitzelement (13) ausklappbar befestigt ist, womit im heruntergeklappten, horizontalen Zustand des Sitzelementes (13) die Toilette (4) völlig abdeckbar ist sowie mittels Abdeckungen (17) das Handwaschbecken (5) abdeckbar ist.

3. Passagierabteil nach einem der Ansprüche 1 oder 2, **dadurch gekennzeichnet, dass** das Tisch-Element (12) an einer Wand (30, 32 oder 34) ausklappbar befestigt ist, wobei das Element (12) im horizontalen Zustand eine für das Arbeiten am Tisch erforderliche Höhenposition einnimmt bzw. auch als erhöhter Sitz dient.

4. Passagierabteil nach Anspruch 1, **dadurch gekennzeichnet, dass** die Grundfläche des Passagierabteils (1) ein Rechteck oder Quadrat mit den Seitenlängen von 1200 bis 1600 mm bildet.

5. Passagierabteil nach Anspruch 2, **dadurch gekennzeichnet, dass** das Sitzelement (13) an der Sitzvorderkante (13A) eine L-förmige Ausbildung aufweist.

6. Passagierabteil nach einem der Ansprüche 1 bis 5, **dadurch gekennzeichnet, dass** das Sitzelement (13) sowie das Tischelement (12) einen ähnlichen strukturellen Aufbau aufweisen, wobei eine Seite eine glatte feste Oberfläche (20) und die andere Seite eine gepolsterte Oberfläche (19) besitzt.

7. Passagierabteils nach Anspruch 6, **dadurch gekennzeichnet, dass** zur wahlweisen Nutzung der glatten (20) oder gepolsterten Oberfläche (19) das Sitzelement (13) und/oder das Tischelement (13) jeweils in der Mittenebene (29) Drehbolzen (21) aufweisen, welche in entsprechende Nuten von - Beschlägen (22) einrasten und durch Verriegelungen (23) gesichert werden sowie der vordere Teil der Elemente (12, 13) sich auf Auflagebeschläge (25) abstützt.

8. Passagierabteil nach einem der Ansprüche 2 bis 7, **dadurch gekennzeichnet, dass** in der Bürokonfiguration des Passagierabteils (1) an einer Seitenwand (32) in Höhe des abgeklappten Tischelements (12) ein Klappsitz (14) angeordnet ist, oberhalb des Tischelementes (12) in Deckennähe ein Hängeschrank (15) als Stauraum angeordnet ist, der Kommunikationsgeräte (33) zur Nutzung freigibt und im Bodenbereich eine EDV-Anlage (28) installiert ist und die Abdeckung (17) des Handwaschbeckens (5) als Ablage nutzbar ist.

9. Passagierabteil nach einem der Ansprüche 1 bis 8, **dadurch gekennzeichnet, dass** die Wände (30, 32, 34) schalldicht ausgeführt sind.

10. Passagierabteil nach einem der Ansprüche 1 bis 9, **dadurch gekennzeichnet,** eine abschaltbare Überwachungseinrichtung (31) innerhalb des Passagierabteils (1) vorgesehen ist.

11. Passagierabteil nach einem der Ansprüche 1 bis 10, **dadurch gekennzeichnet, dass** in der Versorgungskonfiguration des Passagierabteils (1) die Höhe des abgeklappten Tischelements (12) in eine Ebene mit der Höhe des abgeklappten Sitzelementes (13) ausrichtbar ist, wobei Haltemittel (22, 25) an den Wänden (30, 32) das Sitzelement (13) in entsprechender Höhe positionieren.

12. Passagierabteil nach einem der Ansprüche 1 bis 11, **dadurch gekennzeichnet, dass** außen, im Eingangsbereich (2) des Passagierabteils (1) ein Anzeige-Paneel (16) vorgesehen ist und je nach Nutzungsart des Passagierabteils (1) eine entsprechende Information auf dem Anzeige-Paneel (16) erscheint.

13. Passagierabteil nach einem der Ansprüche 1 bis 12, **dadurch gekennzeichnet, dass** als Zugang (2) zum Abteil (1) eine Schwenktür oder eine Schiebetür (7) eingebaut ist, welche manuell oder auf Knopfdruck automatisch betätigbar ist, sowie dass diese Türschließautomatik über Zahlen-Code oder Steckschlüssel aktivierbar ist.

14. Passagierabteil nach einem der Ansprüche 1 bis 13, **dadurch gekennzeichnet, dass** im Passagierabteil (1) ein geringer Unterdruck gegenüber der umgebenden Passagierkabine (100) einstellbar ist.

## Claims

1. Passenger compartment for a cabin in a passenger transport aircraft fitted with elements of equipment for various uses, containing a table element (12) and at least one seating element (13, 14) and corresponding in size approximately to a disabled toilet, with a front wall, a rear wall and side walls, the passenger compartment (1) is also equipped with multi-purpose components, a variable table element (12) is provided as the table element (12) and means for detaining people (10, 11) and stowage spaces (15) which can be adapted to the usage configuration are provided, **characterised in that** the multi-purpose components can be selected from the group of communications devices (33), DP installations (28), microwaves (26) and surveillance devices, the passenger compartment (1) can be configured as a detention cell, wherein the means for detaining persons are formed from handles (10) and holding eyelets (11) fixed in the seat rails (18) for the attachment of handcuffs or foot shackles.

2. Passenger compartment according to claim 1 **characterised in that** the passenger compartment (1) is fitted with a toilet (4) and a wash hand basin (5) and the seating element (13) is fixed in a hinged manner to the wall (30, 32 or 34) above the toilet so that, with the seating element (13) folded down in a horizontal position, the toilet (4) can be fully covered and the wash hand basin (5) can also be covered by means of covers (17).

3. Passenger compartment any one of claims 1 or 2 **characterised in that** the table element (12) is fixed in a hinged manner to a wall (30, 32 or 34), wherein the element (12) in horizontal position adopts a height required for working on the table or acts as an elevated seat.

4. Passenger compartment according to claim 1 **characterised in that** the floor area of the passenger compartment (1) forms a rectangle or square with sides 1200 to 1600 mm long.

5. Passenger compartment according to claim 2 **characterised in that** the seating element (13) has an L-shape on the forward edge of the seat (13A).

6. Passenger compartment according to any one of claims 1 to 5 **characterised in that** the seating element (13) and the table element (12) have a similar structure, wherein one side has a smooth solid surface (20) and the other side has an upholstered surface (19).

7. Passenger compartment according to claim 6 **characterised in that**, for the optional use of the smooth (20) or upholstered surfaces (19), the seating element (13) and/or the table element (13) each have pivot pins (21) in the middle plane (29), which engage in corresponding grooves and are secured by latches (23) and the forward part of the elements (12, 13) is supported on support fittings (25).

8. Passenger compartment according to any one of claims 2 to 7 **characterised in that**, with the passenger compartment (1) in office configuration, a folding seat is positioned on a side wall (32) at the height of the folded table element (12), a cupboard (15) is positioned above the table element (12) near the ceiling as storage space, the communication device (33) is released for use and a DP device (28) is installed in the floor area and the cover (17) of the wash hand basin (5) can be used as a work surface.

9. Passenger compartment any one of claims 1 to 8 **characterised in that** the walls (30, 32, 34) are soundproofed.

10. Passenger compartment any one of claims 1 to 9 **characterised in that** a switchable surveillance device (31) is provided inside the passenger compartment (1).

11. Passenger compartment any one of claims 1 to 10 **characterised in that**, with the passenger compartment (1) in supply configuration, the height of the folded table element (12) can be aligned in a plane with the height of the folded seating element (13), wherein holding means (22, 25) on the walls (30, 32) position the seating element (13) at the appropriate height.

12. Passenger compartment any one of claims 1 to 11 **characterised in that**, outside, in the entry area (2) to the passenger compartment (1), an display panel is provided and, depending on the usage of the passenger compartment (1), appropriate information appears on the display panel (16).

13. Passenger compartment any one of claims 1 to 12 **characterised in that** a pivoting or sliding door (7) is built in as access to the compartment (1), which can be activated manually or automatically by means of a pushbutton, the automatic door closer being able to be activated by means of a numeric code or a key.

14. Passenger compartment any one of claims 1 to 13 **characterised in that** a slight underpressure can be set in the passenger compartment (1) with respect to the adjacent passenger cabin (100).

## Revendications

1. Compartiment pour passagers destiné à une cabine d'un avion de ligne, lequel compartiment pour passagers est équipé d'éléments d'équipement destinés à des utilisations diverses contenant un élément formant table (12) et au moins un élément formant siège (13, 14) et dont l'encombrement correspond environ à un WC pour handicapé, et qui comporte une paroi avant, une paroi arrière et des parois latérales, le compartiment pour passager (1) étant par ailleurs équipé de composants destinés à des utilisations diverses, un élément formant table (12) transformable étant prévu comme élément formant table (12), des moyens destinés à mettre des personnes (10, 11) aux arrêts et des espaces de rangement (15) adaptables à la configuration d'utilisation (15) étant également prévus, **caractérisé en ce que** les composants destinés à des utilisations diverses peuvent être choisis parmi le groupe des appareils de communication (33), des installations informatiques (28), des microondes (26) et des dispositifs de surveillance (31), le compartiment pour passagers (1) pouvant être configuré en une cellule de mise aux arrêts, les moyens de mise aux arrêts des personnes étant formés par des poignées stables (10) et des oeillets de maintien (11) fixés dans des rails de sièges (18) pour fixer des menottes pour les mains ou des menottes pour les pieds.

2. Compartiment pour passagers selon la revendication 1, **caractérisé en ce que** le compartiment pour passagers (1) est équipé d'un WC (4) ainsi que d'un lave-main (5) et l'élément formant siège (13) est fixé à la paroi (30, 32 ou 34), de manière rabattable, au-dessus des toilettes (4), ce par quoi, lorsque l'élément formant siège (13) est à l'état horizontal rabattu vers le bas, le WC (4) peut être intégralement recouvert, le lave-main (5) pouvant également être couvert au moyen d'écrans (17).

3. Compartiment pour passagers selon l'une des revendications 1 ou 2, **caractérisé en ce que** l'élément formant table (12) est fixé de manière rabattable à une paroi (30, 32 ou 34), l'élément (12) à l'état horizontal adoptant une position en hauteur requise pour travailler à la table ou servant également de siège surélevé.

4. Compartiment selon la revendication 1, **caractérisé en ce que** la surface au sol du compartiment pour passagers (1) forme un rectangle ou un carré de 1200 à 1600 mm de côtés.

5. Compartiment pour passagers selon la revendication 2, **caractérisé en ce que** l'élément de siège (13) présente une configuration en L sur l'arête antérieure de siège (13A).

6. Compartiment pour passagers selon l'une des revendications 1 à 5, **caractérisé en ce que** l'élément formant siège (13) ainsi que l'élément formant table (12) présentent une conception structurelle similaire, un côté possédant une surface lisse (20), rigide, et l'autre côté possédant une surface capitonnée (19).

7. Compartiment pour passagers selon la revendication 6, **caractérisé en ce que** pour utiliser au choix la surface lisse (20) ou capitonnée (19), l'élément formant siège (13) et/ou l'élément formant table (13) présentent chacun, dans le plan médian (29), des boulons tournants (21) qui viennent s'encliqueter dans des gorges complémentaires de ferrures (22) et sont fixés par des verrouillages (23), et la partie avant des éléments (12, 13) s'appuie sur des ferrures d'appui (25).

8. Compartiment pour passagers selon l'une des revendications 2 à 7, **caractérisé en ce que**, dans la configuration en bureau du compartiment pour passagers (1), un siège rabattable (14) est agencé sur une paroi latérale (32) à la hauteur de l'élément formant table (12) rabattu, un placard suspendu (15) tenant lieu d'espace de rangement est disposé au-dessus de l'élément formant table (12) à proximité du plafond, lequel placard suspendu donne accès à des appareils de communication (33) utilisables et un système informatique (28) est installé dans la zone du plancher et permet d'utiliser le couvercle (17) du lave-main (5) comme plate-forme.

9. Compartiment pour passagers selon l'une des revendications 1 à 8, **caractérisé en ce que** les parois (30, 32, 34) sont réalisées de manière insonorisées.

10. Compartiment pour passagers selon l'une des revendications 1 à 9, **caractérisé en ce qu'**un dispositif de surveillance (31) éteignable est prévu à l'intérieur du compartiment pour passagers (1).

11. Compartiment pour passagers selon l'une des revendications 1 à 10, **caractérisé en ce que**, dans la configuration du compartiment pour passagers (1) en espace de soins, la hauteur de l'élément formant table (12) rabattu peut être ajustée dans un plan avec la hauteur de l'élément formant siège (13) rabattu, des moyens de retenue (22, 25) sur les parois (30, 32) positionnant l'élément formant siège (13) à hauteur correspondante.

12. Compartiment pour passagers selon l'une des revendications 1 à 11, **caractérisé en ce qu'**un panneau d'affichage (16) est prévu extérieurement, dans la zone d'entrée (2) du compartiment pour passagers (1) et une information correspondante apparaît sur le panneau d'affichage (16) selon le mode d'utilisation du compartiment pour passagers (1).

13. Compartiment pour passagers selon l'une des revendications 1 à 12, **caractérisé en ce qu'**il est monté une porte battante ou une porte coulissante tenant lieu d'accès (2) au compartiment (1) qui peut être actionnée manuellement ou automatiquement par pression sur un bouton, ainsi qu'en ce que ce mécanisme de fermeture automatique de porte peut être activé par code chiffré ou par clé à insérer.

14. Compartiment pour passagers selon l'une des revendication 1 à 13, **caractérisé en ce qu'**il est possible de régler dans le compartiment pour passagers (1) une légère dépression par rapport à la cabine pour passagers (100) environnante.
